# EUROPEAN PATENT SPECIFICATION

(11) **EP 2 751 406 B1**
(45) Date of publication and mention of the grant of the patent: **27.07.2016**
(21) Application number: 12827511.2
(22) Date of filing: 28.08.2012
(51) Int. Cl.: F01N 11/00, F01N 3/20, F01N 9/00

(54) **METHOD AND SYSTEM FOR DETECTING REDUCING AGENT CRYSTALS IN AN SCR EXHAUST AFTER TREATMENT SYSTEM**
VERFAHREN UND SYSTEM ZUR ERKENNUNG VON REDUKTIONSMITTELKRISTALLEN IN EINEM SCR- ABGASNACHBEHANDLUNGSSYSTEM
PROCÉDÉ ET SYSTÈME POUR DÉTECTER DES CRISTAUX D'AGENT RÉDUCTEUR DANS UN SYSTÈME DE POST-TRAITEMENT D'ÉCHAPPEMENT DE SYSTÈME DE RÉDUCTION CATALYTIQUE SÉLECTIVE

(30) Priority: 31.08.2011 SE 1150789
(43) Date of publication of application: 09.07.2014
(73) Proprietor: Scania CV AB, 151 87 Södertälje (SE)
(72) Inventor: SIMON, Anders, 152 51 Södertälje (SE)
(74) Representative: Scania CV AB
(86) International application number: PCT/SE2012/050909
(87) International publication number: WO 2013/032390

(56) References cited:
- WO-A1-2012/052799
- WO-A1-2012/052799
- US-A1- 2008 271 440
- US-A1- 2008 271 440
- US-A1- 2010 122 525
- US-A1- 2011 030 343
- US-A1- 2011 030 343
- US-A1- 2011 146 240

## Description

### TECHNICAL FIELD

The present invention relates to a method pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected. The invention relates also to a computer programme product comprising programme code for a computer for implementing a method according to the invention. The invention relates also to an SCR system and a motor vehicle which is equipped with the SCR system.

### BACKGROUND

Vehicles today use, for example, urea as reducing agent in SCR (selective catalytic reduction) systems which comprise an SCR catalyst in which said reducing agent and NOx gas can react and be converted to nitrogen gas and water. Various types of reducing agents may be used in SCR systems. AdBlue is an example of a commonly used reducing agent.

One type of SCR system comprises a container which holds a reducing agent. The SCR system has also a pump adapted to drawing said reducing agent from the container via a suction hose and supplying it via a pressure hose to a dosing unit situated adjacent to an exhaust system of the vehicle, e.g. adjacent to an exhaust pipe of the exhaust system. The dosing unit is adapted to injecting a necessary amount of reducing agent into the exhaust pipe upstream of the SCR catalyst according to running routines which are stored in a control unit of the vehicle. To make it easier to regulate the pressure when there are small or no dosing amounts, the system comprises also a return hose which runs back to the container from a pressure side of the system.

The SCR catalyst in the vehicle's exhaust duct comprises inter alia a vaporisation module and a portion with an SCR substrate. Said vaporisation portion is adapted to vaporising dosed reducing agent in order to achieve better mixing between the exhaust gases and said dosed reducing agent.

In cases where not all of the dosed reducing agent is vaporised, precipitates of it may form, normally consisting of crystals which attach themselves to one or more parts of the SCR catalyst's vaporisation module. With continued dosing of reducing agent these crystals may build up further and are likely to lead to adverse consequences. The problem of the build-up of reducing agent crystals in SCR systems of motor vehicles is well known.

One cause of said undesirable build-up of reducing agent crystals may be that the vaporisation capacity of the vaporisation module in certain operating situations is overestimated. Said reducing agent crystals may also be referred to as urea stones.

There are a number of problems associated with build-up of urea stones in the SCR catalyst's vaporisation module.

Firstly, an exhaust backpressure may increase in the engine's exhaust system, imposing a greater load on the engine and thereby forcing it to work unnecessarily hard, at undesirably high loads.

Secondly, a degree of conversion by the SCR catalyst may be impaired, causing an increase in undesirable emissions from the vehicle.

Thirdly, in cases where build-up of urea stones is not prevented the exhaust system may eventually become totally obstructed, completely preventing the passing of an exhaust flow.

US 2008/0271440 describes a method for running a post-treatment device connected downstream of a combustion engine and comprising an SCR catalyst. The method comprises the steps of setting a threshold value of accumulated urea deposition for regeneration of the catalyst, determining that the threshold value has been reached, and responding by regenerating the catalyst by keeping it at a predetermined regeneration temperature for a predetermined period of time.

US2010/0122525 describes an exhaust cleaning system which decides whether an accumulated amount of deposition on an inside wall of an exhaust passage is equal to or greater than a predetermined value. When such is the case, the supply of urea solution into the system is decreased by means of a valve. Thereafter the temperature of the exhaust gases rises quickly when a torque of a diesel engine increases. The deposit accumulated on the inside wall then disintegrates and is supplied to the SCR catalyst in the form of ammonia.

### SUMMARY OF THE INVENTION

An object of the present invention is to propose a novel and advantageous method for improving the performance of an SCR system.

Another object of the invention is to propose a novel and advantageous SCR system and a novel and advantageous computer programme for improving the performance of an SCR system.

An object of the present invention is to propose a novel and advantageous method for reliably detecting the presence of undesirable reducing agent crystals in the SCR catalyst of the SCR system.

A further object of the invention is to propose an alternative method pertaining to an SCR system, an alternative computer programme pertaining to an SCR system, and an alternative SCR system which results in reliable detection of the presence of undesirable reducing agent crystals in the SCR catalyst of the SCR system.

These objects are achieved with a method pertaining to a SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected, according to claim 1.

One aspect of the invention is a proposed method pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected. The innovative method comprises the steps of
- shutting off the supply of reducing agent to the exhaust flow at a first time so that the catalyst is substantially emptied of vaporised reducing agent,
- measuring NOₓ contents upstream and downstream of the catalyst at a later second time corresponding to a first temperature of the catalyst at which reducing agent crystals vaporise,
- comparing NOₓ contents measured upstream and downstream of the catalyst and, if the difference between NOₓ content measured upstream of the catalyst and NOₓ content measured downstream of it exceeds a certain value, taking this as an indication of possible presence of reducing agent crystals in the catalyst,
- measuring NOₓ contents upstream and downstream of the catalyst at a third time corresponding to a second temperature of the catalyst at which reducing agent crystals do not vaporise,
- comparing NOₓ contents measured upstream and downstream of the catalyst and, if the difference between NOₓ content measured upstream of the catalyst and NOₓ content measured downstream of it is below a certain value, the NOₓ contents are taken to be correctly measured, and
- concluding that reducing agent crystals are present, provided that the NOₓ contents are correctly measured and the presence of reducing agent crystals in the catalyst has been indicated.

Emptying the SCR catalyst of stored-up dosed urea and subsequently, at a temperature at which reducing agent crystals can vaporise, measuring NOₓ contents upstream and downstream of the catalyst makes it possible to determine whether there is a difference between the measured levels of NOₓ. If the difference exceeds a certain level, it may be assumed
a) that at least one of the two NOₓ sensors provided is affected by a fault, and/or
b) that there is in the catalyst at least one reducing agent crystal which has at least partly vaporised and has affected measured NOₓ content downstream of the catalyst.

NOₓ contents are herein regarded as correctly measured if the NOₓ sensors are operating as intended and therefore measure correctly, i.e. without errors.

To exclude the possibility of either of the NOₓ sensors being affected by a fault as in a) above, e.g. a so-called gain error, another measurement of NOₓ contents upstream and downstream of the SCR catalyst is made at a temperature at which reducing agent crystals cannot vaporise. Any difference between NOₓ contents upstream and downstream of the catalyst may thus be determined. If the difference is below a certain level, it may be taken that the sensors are working properly and that there is at least one reducing agent crystal in the catalyst. In this context the two sensors should measure substantially the same NOₓ content at their respective locations upstream and downstream of the catalyst.

Detection of the presence of reducing agent crystals in the SCR catalyst's vaporisation module may be conducted while the vehicle is in motion on a road. One aspect of the invention is thus a proposed user-friendly method in that the vehicle need not be taken out of traffic for the detection method to be conducted at a workshop or service centre.

Detection of the presence of reducing agent crystals in the SCR catalyst's vaporisation module may alternatively be conducted at such a workshop or service centre. This may for example be appropriate on the occasion of a planned maintenance operation. To this end, a raised temperature of the catalyst such as to cause vaporisation of reducing agent crystals may be achieved by running the vehicle's engine at a raised speed and applying suitable exhaust backpressure by means of an exhaust brake of the vehicle. Conversely, a lower temperature of the catalyst such as not to cause vaporisation of reducing agent crystals may be achieved by running the vehicle's engine at an idling speed for a certain time. By making measurements of NOₓ contents upstream and downstream of the catalyst at these two different temperatures, measurement at the higher temperature being preceded by the step of emptying the catalyst of stored-up dosed reducing agent according to the invention, it is possible to determine at a workshop or service centre whether there are reducing agent crystals in the catalyst.

Said third time may be a further later time, i.e. it may be after both the first time and the second time.

Said third time may be prior to said first time and said second time, resulting in a more versatile method according to one aspect of the present invention.

The possibility of making the one set of NOₓ content measurements upstream and downstream of the SCR catalyst at substantially any suitable time, i.e. at a temperature at which reducing agent crystals do not vaporise, results in a more flexible method according to the present invention.

Said first temperature may be above 300 degrees Celsius. It may be above a predetermined value. In this context a suitable temperature which causes vaporisation of the intended reducing agent in the SCR system may be used. This results in a more versatile solution according to one aspect of the invention.

Said second temperature may be below 200 degrees Celsius. It may be below a predetermined value. In this context a suitable temperature which does not cause vaporisation of the intended reducing agent in the SCR system may be used. This results in a more versatile solution according to one aspect of the invention.

Said reducing agent may be a urea-based reducing agent, e.g. AdBlue.

The method may further comprise the step of supplying reducing agent to the exhaust flow after the second time. It may comprise the step of supplying reducing agent to the exhaust flow after the second time but before the third time in cases where the third time is after the second time. Lower emissions from the SCR system may thus be achieved pending an operating situation which results in a lower temperature of the SCR system at which measurements of NOₓ content upstream and downstream of the SCR catalyst are made and at which reducing agent crystals cannot vaporise.

The method is easy to implement in existing motor vehicles. Software pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected according to the invention may be installed in a control unit of the vehicle during the manufacture of the vehicle. A purchaser of the vehicle may thus have the possibility of selecting the function of the method as an option. Alternatively, software which comprises programme code for applying the innovative method pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected may be installed in a control unit of the vehicle on the occasion of upgrading at a service station, in which case the software may be loaded into a memory in the control unit.

Software which comprises programme code pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected is easy to update or replace. Moreover, different parts of the software which comprise programme code pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected may be replaced independently of one another. This modular configuration is advantageous from a maintenance perspective.

One aspect of the invention is a proposed SCR system comprising means adapted to supplying reducing agent to an exhaust flow upstream of an SCR catalyst and means adapted to measuring the content of NOₓ in the exhaust gases upstream and downstream of the catalyst, thereby detecting any presence of reducing agent crystals in the catalyst. The SCR system comprises
- means for shutting off the supply of reducing agent to the exhaust flow at a first time so that the catalyst is substantially emptied of vaporised reducing agent,
- means for measuring NOₓ contents upstream and downstream of the catalyst at a later second time corresponding to a first temperature of the catalyst at which reducing agent crystals vaporise,
- means for comparing NOₓ contents measured upstream and downstream of the catalyst and, if the difference between NOₓ content measured upstream of the catalyst and NOₓ content measured downstream of it exceeds a certain value, taking this as an indication of possible presence of reducing agent crystals in the catalyst,
- means for measuring NOₓ contents upstream and downstream of the catalyst at a third time corresponding to a second temperature of the catalyst at which reducing agent crystals do not vaporise,
- means for comparing NOₓ contents measured upstream and downstream of the catalyst and, if the difference between NOₓ content measured upstream of the catalyst and NOₓ content measured downstream of it is below a certain value, concluding that the NOₓ contents are correctly measured, and
- means for determining that reducing agent crystals are present, provided that the NOₓ contents are correctly measured and the presence of reducing agent crystals in the SCR catalyst has been indicated.

Advantageous embodiments are indicated with reference to the independent claims 9-13.

The above objects are also achieved with a motor vehicle which is provided with the SCR system. The vehicle may be a truck, bus or car.

An aspect of the invention is a proposed computer programme pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected, which programme comprises programme code stored on a computer-readable medium for causing an electronic control unit or another computer connected to the electronic control unit to perform steps according to any one of claims 1-7.

An aspect of the invention is a proposed computer programme pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected, which programme comprises programme code for causing an electronic control unit or another computer connected to the electronic control unit to perform steps according to any one of claims 1-7.

An aspect of the invention is a proposed computer programme product comprising a programme code stored on a computer-readable medium for performing method steps according to any one of claims 1-7 when said computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations within other fields, which are within the scope of the invention.

### BRIEF DESCRIPTION OF THE DRAWINGS

For fuller understanding of the present invention and its further objects and advantages, the detailed description set out below should be read in conjunction with the accompanying drawings, in which the same reference notations pertain to similar items in the various diagrams and
Figure 1 schematically illustrates a vehicle according to an embodiment of the invention,
Figure 2a schematically illustrates a subsystem for the vehicle depicted in

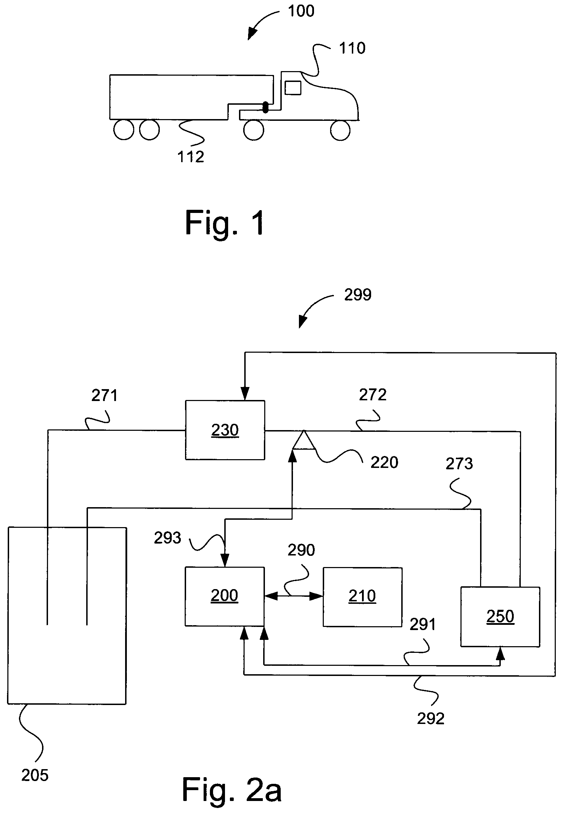

Figure 1, according to an embodiment of the invention,

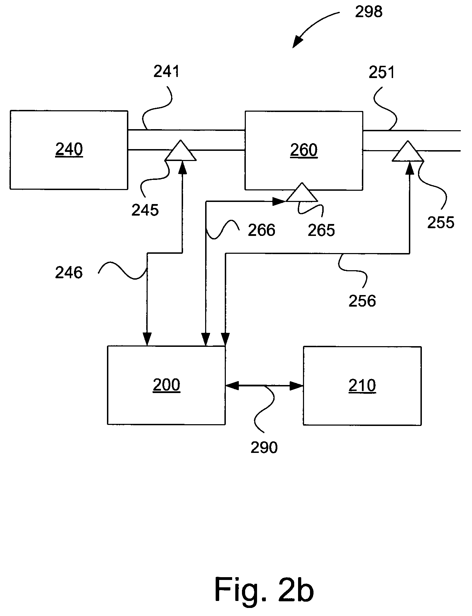

Figure 2b schematically illustrates a subsystem for the vehicle depicted in
Figure 1, according to an embodiment of the invention,

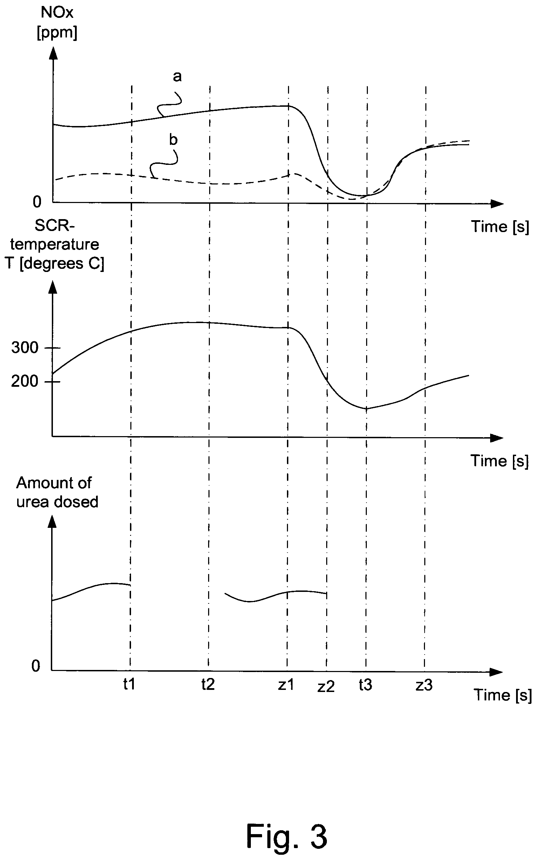

Figure 3 schematically illustrates a number of different graphs according to an aspect of the invention,

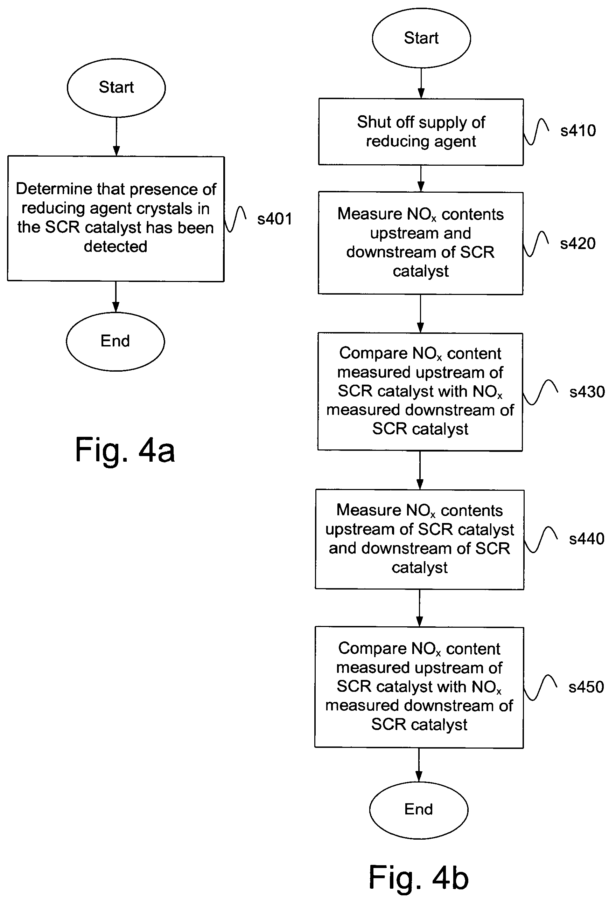

Figure 4a is a schematic flowchart of a method according to an embodiment of the invention,
Figure 4b is a more detailed schematic flowchart of a method according to an embodiment of the invention, and

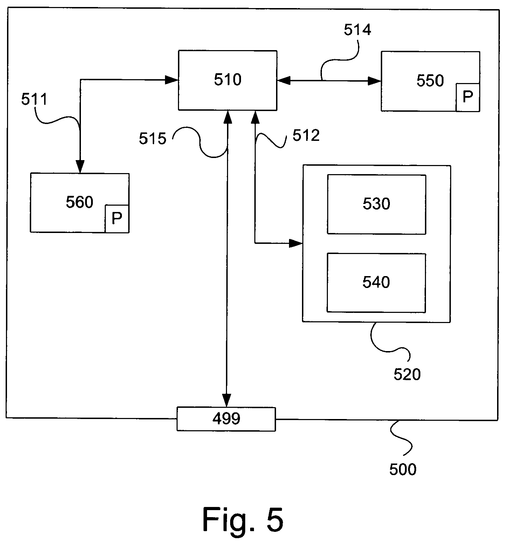

Figure 5 schematically illustrates a computer according to an embodiment of the invention.

### DETAILED DESCRIPTION OF THE DRAWINGS

Figure 1 depicts a side view of a vehicle 100. The vehicle here exemplified comprises a tractor unit 110 and a semitrailer 112. The vehicle may be a heavy vehicle, e.g. a truck or a bus. It may alternatively be a car.

It should be noted that the invention is suitable for application in any SCR system and is therefore not restricted to SCR systems of motor vehicles. The innovative method and the innovative SCR system according to an aspect of the invention are well suited to other platfforms which comprise an SCR system than motor vehicles, e.g. watercraft. The watercraft may be of any kind, e.g. motorboats, steamers, ferries or ships.

The innovative method and the innovative SCR system according to an aspect of the invention are for example also well suited to systems which comprise industrial engines and/or engine-powered industrial robots.

The innovative method and the innovative SCR system according to an aspect of the invention are also well suited to various kinds of power plants, e.g. an electric power plant provided with a diesel generator.

The innovative method and the innovative SCR system are well suited to any engine system which comprises an engine and an SCR system, e.g. on a locomotive or some other platform.

The innovative method and the innovative SCR system are well suited to any system which comprises an NOₓ generator and an SCR system.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reducing agent in liquid form. The line may be a pipe of any size. The line may be made of any suitable material, e.g. plastic, rubber or metal.

The term "reducing agent" refers herein to an agent used for reacting with certain emissions in an SCR system. These emissions may for example be NOx gas. Another term for said reducing agent is "reductant". The terms "reductant" and "reducing agent" are herein used synonomously. Said reducing agent in one version is so-called AdBlue. Other kinds of reducing agent may of course be used. AdBlue is herein cited as an example of a reducing agent, but one skilled in the art will appreciate that the innovative method and the innovative SCR system are feasible with other types of reducing agent.

The possibility that reducing agent in the SCR system may form undesirable reducing agent crystals is herein described. These reducing agent crystals may also be called urea clumps, urea stones or urea precipitates.

Reducing agent crystals may form if an engine and its associated SCR system are run at an unsuitable operating point with regard to temperature and exhaust flow over a certain time, causing more reducing agent to be dosed than can be vaporised. This may result in accumulation of reducing agent in the exhaust system, e.g. in a vaporisation module of the SCR catalyst or in the exhaust system's silencer. Such accumulation of reducing agent is initially in liquid form, but continued operation of the engine and the SCR system at unsuitable operating points may result in its solidifying and forming a so-called urea precipitate which may quickly increase in size during continued operation of the engine and the SCR system.

Said reducing agent crystals may mainly consist of urea, but various types of more or less stable deposits may occur and may for example contain CYA (cyanuric acid) and in certain cases even ammelide.

The colour of said reducing agent crystals may indicate their composition. In principle the darker their colour the more stable their constituent urea byproducts and the higher the temperature required for successful removal of the crystals by burning off.

The regions of the reducing agent crystals where precipitation is initiated are often darker in colour, whereas the build-up layers are lighter.

Figure 2a depicts a subsystem 299 of the vehicle 100. This subsystem is situated in the tractor unit 110 and may be part of an SCR system. It comprises in this example a container 205 arranged to hold a reducing agent in liquid form. This container is adapted to containing a suitable amount of reducing agent and also to being replenishable as necessary. It might for example accommodate 75 or 50 litres of reducing agent.

A first line 271 is provided to lead the reducing agent to a pump 230 from the container 205. The pump may be any suitable pump. It may be a diaphragm pump provided with at least one filter. It may be adapted to being driven by an electric motor. It is adapted to drawing the reducing agent from the container 205 via the first line 271 and supplying it via a second line 272 to a dosing unit 250. The dosing unit comprises an electrically controlled dosing valve by means of which a flow of reducing agent added to the exhaust system can be controlled. The pump 230 is adapted to pressurising the reducing agent in the second line 272. The dosing unit 250 is provided with a throttle unit against which said pressure of the reducing agent builds up in the subsystem 299.

The dosing unit 250 is adapted to supplying said reducing agent to an exhaust system of the vehicle 100. The exhaust system is referred to in more detail with reference to Figure 2b below. More specifically, the dosing unit is adapted to supplying a suitable amount of reducing agent in a controlled way to an exhaust system of the vehicle. In this version, an SCR catalyst (see Figure 2b) is situated downstream of a location in the exhaust system where the supply of reducing agent takes place.

The dosing unit 250 is situated adjacent to, for example, an exhaust pipe which is adapted to leading exhaust gases from a combustion engine (see Figure 2b) of the vehicle to the SCR catalyst.

A third line 273 runs between the dosing unit 250 and the container 205 and is adapted to leading back to the container a certain amount of the reductant fed to the dosing valve 250. This configuration results in advantageous cooling of the dosing unit.

A first control unit 200 is arranged for communication with a pressure sensor 220 via a link 293. The pressure sensor is adapted to detecting a prevailing pressure of the reductant at the location where the sensor is fitted. In this version it is situated adjacent to the second line 272 in order to measure a working pressure of the reductant downstream of the pump 230. The pressure sensor is adapted to continuously sending signals to the first control unit 200 which contain information about a prevailing pressure of the reductant.

The first control unit 200 is arranged for communication with the pump 230 via a link 292. This first control unit is adapted to controlling the operation of the pump in order, for example, to regulate the flow of reductant within the subsystem 299. It is adapted to controlling an operating power of the pump by regulating the associated electric motor.

The first control unit 200 is arranged for communication with the dosing unit 250 via a link 291. This first control unit is adapted to controlling the operation of the dosing unit in order, for example, to regulate the supply of reductant to the vehicle's exhaust system. It is adapted to controlling the operation of the dosing unit in order, for example. to regulate the return supply of reductant to the container 205.

A second control unit 210 is arranged for communication with the first control unit 200 via a link 290. This second control unit may be detachably connected to the first control unit. It may be a control unit external to the vehicle. It may be adapted to effecting the innovative method steps according to the invention. It may be used to cross-load software to the first control unit, particularly software for applying the innovative method. It may alternatively be arranged for communication with the first control unit via an internal network in the vehicle. It may be adapted to performing functions substantially similar to the first control unit, e.g. comparing NOₓ contents measured upstream and downstream of the SCR catalyst at different temperatures in order to determine any indication of possible presence of reducing agent crystals in the catalyst and to determine that their presence in the catalyst has been detected. The innovative method may be applied by the first control unit 200 or the second control unit 210 or by both of them, in which case the first control unit may conduct certain parts of the innovative method and the second control unit certain other parts.

Figure 2b depicts a subsystem 298 of the vehicle 100. This subsystem is situated in the tractor unit 110 and may form part of an SCR system. It comprises in this example a combustion engine 240 and a first exhaust passage 241 adapted to leading an exhaust flow generated by the engine to an SCR catalyst 260. The catalyst is incorporated in a silencer of the vehicle 100 in a conventional way. In addition, a second exhaust passage 251 is provided to lead the exhaust flow to the vehicle's surroundings.

A first NOₓ sensor 245 is provided adjacent to the first exhaust passage 241 and is adapted to measuring a prevailing NOₓ content in the first exhaust passage. It is adapted to measuring a prevailing NOₓ content in the first exhaust passage upstream of the SCR catalyst 260. This first NOₓ sensor is arranged for communication with the first control unit 200 via a link 246. It is adapted to continuously sending signals to the first control unit which contain information about a prevailing NOₓ content of the exhaust flow. The first control unit is adapted to receiving said signals containing a prevailing NOₓ content of the exhaust flow upstream of the catalyst.

A second NOₓ sensor 255 is provided adjacent to the second exhaust passage 251 and is adapted to measuring a prevailing NOₓ content in the second exhaust passage 251. It is adapted to measuring a prevailing NOₓ content in the second exhaust passage downstream of the SCR catalyst 260. This second sensor is arranged for communication with the first control unit 200 via a link 256. It is adapted to continuously sending signals to the first control unit which contain information about a prevailing NOₓ content of the exhaust flow. The first control unit is adapted to receiving said signals containing a prevailing NOₓ content of the exhaust flow downstream of the catalyst.

A temperature sensor 265 is provided adjacent to the SCR catalyst 260 and is adapted to measuring a representation of prevailing temperatures of the catalyst. It may be adapted to measuring a prevailing temperature of the exhaust flow in the catalyst. Alternatively it may be adapted to measuring a temperature of a vaporisation module of the catalyst. It is arranged for communication with the first control unit 200 via a link 266. It is adapted to continuously sending signals to the first control unit which contain information about a prevailing temperature in its monitoring region. The first control unit is adapted to receiving said signals containing a prevailing temperature in the monitoring region adjacent to the catalyst.

The first control unit 200 is arranged for communication with the second control unit 210, as also depicted in Figure 2a above.

The first control unit 200 is adapted to continuously receiving signals which contain information about prevailing temperatures of the SCR catalyst 260 and NOₓ contents upstream and downstream of the catalyst. On the basis of these signals the first control unit can at an appropriate time shut off the supply of reducing agent to the exhaust flow so that the catalyst is substantially emptied of vaporised reducing agent. The first control unit is further adapted, where applicable, i.e. at a temperature of the catalyst at which reducing agent crystals vaporise, to measuring NOₓ contents upstream and downstream of the catalyst, to comparing them and, if the difference between NOₓ content measured upstream of the catalyst and NOₓ content measured downstream of it exceeds a certain value, to taking this as an indication of possible presence of reducing agent crystals in the catalyst.

The first control unit 200 is further adapted to measuring NOₓ contents upstream and downstream of the SCR catalyst at a temperature at which reducing agent crystals do not vaporise, to comparing NOₓ content measured upstream of the catalyst with NOₓ content measured downstream of it and, if the difference is below a certain value, to taking it that they are correctly measured; and to concluding that reducing agent crystals are present, provided that the NOₓ contents are correctly measured and the presence of reducing agent crystals in the catalyst has been indicated.

Figure 3 plots schematically three different parameters against time in an embodiment example which illustrates an aspect of the present invention.

The first parameter refers to NOₓ content in the exhaust flow from the engine 240 as a function of time. The continuous line a represents NOₓ content continuously measured upstream of the SCR catalyst 260 by the first NOₓ sensor 245. The broken line b represents NOₓ content continuously measured downstream of the catalyst by the second NOₓ sensor 255.

The second parameter refers to a prevailing temperature T of the catalyst, which is measured continuously by the temperature sensor 265.

The third parameter refers to amounts of reducing agent dosed (containing urea) to the exhaust flow, which are calculated continuously by the first control unit 200 inter alia on the basis of prevailing pressure of the reducing agent (measured by the pressure sensor 220) and opening times of the dosing unit 250.

It may be seen in Figure 3 that urea dosing is shut off at a first time t1, followed by the catalyst being emptied of stored-up (vaporised) reducing agent. First measurements of NOₓ content upstream and downstream of the catalyst are made and compared at a second time t2 when the temperature of the catalyst is above 300 degrees Celsius. In this example the measured values differ sufficiently to be taken as an indication that there may be reducing agent crystals in the catalyst.

At a time z1 the propulsion of the vehicle is altered in such a way that a prevailing temperature of the catalyst drops to below 200 degrees Celsius. At a time z2 the temperature of the catalyst is 200 degrees Celsius.

At a third time t3 second measurements of NOₓ content upstream and downstream of the catalyst are made and compared. In this example the measured values at that time are similar enough to conclude that there are reducing agent crystals in the catalyst.

In one example a running average may be calculated for NOₓ contents measured upstream and downstream of the SCR catalyst over a period defined by the third time and a time z3. If the calculated running averages over that period are similar enough, reducing agent crystals may be taken to have been detected in the catalyst.

In one example, reducing agent dosing may take place between the second time t2 and the time z2. At time z2 the first control unit 200 may actively switch reducing agent dosing off, since it is not appropriate to dose reducing agent at temperatures below 200 degrees Celsius.

Figure 4a is a schematic flowchart of a method pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected, according to an embodiment of the invention.

The method comprises a first step s401 comprising the steps of:
- shutting off the supply of reducing agent to the exhaust flow at a first time so that the catalyst is substantially emptied of vaporised reducing agent,
- measuring NOₓ contents upstream and downstream of the catalyst at a later second time corresponding to a first temperature of the catalyst at which reducing agent crystals vaporise,
- comparing NOₓ contents measured upstream and downstream of the catalyst and, if the difference between NOₓ content measured upstream of the catalyst and NOₓ content measured downstream of it exceeds a certain value, taking this as an indication of possible presence of reducing agent crystals in the catalyst,
- measuring NOₓ contents upstream and downstream of the catalyst at a third time corresponding to a second temperature of the catalyst at which reducing agent crystals do not vaporise,
- comparing NOₓ content measured upstream and downstream of the catalyst and, if the difference between NOₓ content measured upstream of the catalyst and NOₓ content measured downstream of it is below a certain value, the NOₓ contents are taken to be correctly measured, and
- concluding that reducing agent crystals are present, provided that the NOₓ contents are correctly measured and the presence of reducing agent crystals in the catalyst has been indicated.

The method ends after step s401.

Figure 4b is a schematic flowchart of a method pertaining to an SCR system whereby reducing agent is supplied to an exhaust flow upstream of an SCR catalyst, the content of NOₓ in the exhaust gases is measured upstream and downstream of the catalyst and any presence of reducing agent crystals in the catalyst is detected, according to an embodiment of the invention.

The method comprises a first step s410 comprising the step at a first time t1 of shutting off the supply of reducing agent to the exhaust flow so that the catalyst is substantially emptied of vaporised (stored-up) reducing agent. This step is performed at a suitable time at which the catalyst may for example have reached a temperature above 300 degrees Celsius, at which reducing agent crystals in the catalyst can vaporise. Step s410 is followed by a step s420.

Method step s420 comprises the step of measuring NOₓ contents upstream and downstream of the catalyst at a later second time t2 corresponding to a first temperature T1 of the catalyst at which reducing agent crystals can vaporise. In one example said first temperature T1 is above 300 degrees Celsius. Said measurements are made respectively by the first NOₓ sensor 245 and the second NOₓ sensor 255. An alternative is to take a running average of NOₓ contents measured upstream and downstream of the catalyst over a predetermined period, e.g. 10 seconds, at a time when the catalyst is regarded as empty of vaporised reducing agent, e.g. at the second time t2. Step s420 is followed by a step s430.

Method step s430 comprises the step of comparing NOₓ contents measured upstream and downstream of the catalyst and, if the difference between them exceeds a certain value, taking this as an indication of possible presence of reducing agent crystals in the catalyst.

In one version possible presence of reducing agent crystals in the catalyst is taken to be indicated if the difference between NOₓ contents measured upstream and downstream of the catalyst exceeds a relative difference of 35%.

Step s430 is followed by a step s440.

Method step s440 comprises the step of measuring NOₓ contents upstream and downstream of the SCR catalyst at a third time t3 corresponding to a second temperature T2 of the catalyst at which reducing agent crystals do not vaporise.

Said measurements are made respectively by the first NOₓ sensor 245 and the second NOₓ sensor 255. An alternative is to take a running average of NOₓ contents measured upstream and downstream of the catalyst over a predetermined period, e.g. 10 seconds, at a suitable time either before or after the aforesaid measurements at the second time.

In one example said second temperature T2 is below 200 degrees Celsius. Step s440 is followed by a step s450.

Step s450 comprises the step of comparing NOₓ contents measured upstream and measured downstream of the catalyst and, if the difference between NOₓ content measured upstream of the catalyst and NOₓ content measured downstream of it is below a certain value, the NOₓ contents are taken to be correctly measured, and concluding that reducing agent crystals are present, provided that the NOₓ contents are correctly measured and their presence in the catalyst has been indicated.

In one version it is taken that presence of reducing agent crystals in the catalyst is detected if the difference between NOₓ contents measured upstream and downstream of the catalyst is less than a relative difference of 10%.

The method ends after step s450.

Figure 5 is a diagram of a version of a device 500. The control units 200 and 210 described with reference to Figure 2 may in one version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for shutting off the supply of reducing agent to the exhaust flow at a first time so that the SCR catalyst is substantially emptied of vaporised reducing agent.

The programme P comprises routines for measuring NOₓ contents upstream and downstream of the SCR catalyst at a later second time corresponding to a first temperature of the catalyst at which reducing agent crystals vaporise.

The programme P comprises routines for comparing NOₓ contents measured upstream and downstream of the SCR catalyst and, if the difference between them exceeds a certain value, taking this as an indication of possible presence of reducing agent crystals in the catalyst.

The programme P comprises routines for measuring NOₓ contents upstream and downstream of the SCR catalyst at a third time corresponding to a second temperature of the catalyst at which reducing agent crystals do not vaporise.

The programme P comprises routines for comparing NOₓ contents measured upstream and downstream of the SCR catalyst and, if the difference between NOₓ content measured upstream of the catalyst and NOₓ content measured downstream of it is below a certain value, the NOₓ contents are deemed correctly measured, and taking it that reducing agent crystals are present, provided that the NOₓ contents are correctly measured and the presence of reducing agent crystals in the catalyst has been indicated.

The programme P may be stored in an executable form or in compressed form in a memory 560 and/or in a read/write memory 550.

Where it is stated that the data processing unit 510 performs a certain function, it means that it effects a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is arranged to communicate with the data processing unit via a data bus 514. The links 246, 256, 266, 290, 291, 292 and 293, for example, may be connected to the data port 599 (see Figures 2a,2b).

When data are received on the data port 599, they are stored temporarily in the second memory element 540. When input data received have been temporarily stored, the data processing unit 510 will be ready to conduct code execution as described above. In one version, signals received on the data port 599 contain information about a prevailing temperature of the SCR catalyst 260.

In one version, signals received on the data port 599 contain information about a prevailing NOₓ content upstream of the SCR catalyst 260.

In one version, signals received on the data port 599 contain information about a prevailing NOₓ content downstream of the SCR catalyst 260.

The signals received on the data port 599 may be used by the device 500 to detect any presence of reducing agent crystals in the SCR catalyst 260 according to the innovative method.

Parts of the methods herein described may be conducted by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments have been chosen and described in order best to explain the principles of the invention and their practical applications and thereby make it possible for one skilled in the art to understand the invention for different embodiments and with the various modifications appropriate to the intended use.

## Claims

1. A method pertaining to an SCR system whereby reducing agent is supplied to an exhaust flow upstream of an SCR catalyst (260), the content of NOₓ in the exhaust gases is measured upstream and downstream of the SCR catalyst (260) and any presence of reducing agent crystals in the SCR catalyst (260) is detected,
**characterised by** the steps of
- shutting off (s410) the supply of reducing agent to the exhaust flow at a first time (t1) so that the SCR catalyst (260) is substantially emptied of vaporised reducing agent,
- measuring (s420) NOₓ contents upstream and downstream of the SCR catalyst (260) at a later second time (t2) corresponding to a first temperature (T1) of the SCR catalyst (260) at which reducing agent crystals vaporise,
- comparing (s430) NOₓ content measured upstream of the SCR catalyst (260) with NOₓ content measured downstream of the SCR catalyst (260) and, if the difference between NOₓ content measured upstream of the SCR catalyst (260) and NOₓ content measured downstream of the SCR catalyst (260) exceeds a certain value, taking this as an indication of possible presence of reducing agent crystals in the SCR catalyst (260),
- measuring (s440) NOₓ contents upstream of the SCR catalyst (260) and downstream of the SCR catalyst (260) at a third time (t3) corresponding to a second temperature (T2) of the SCR catalyst (260) at which reducing agent crystals do not vaporise,
- comparing (s450) NOₓ content measured upstream of the SCR catalyst (260) with NOₓ content measured downstream of the SCR catalyst (260) and, if the difference between NOₓ content measured upstream of the SCR catalyst (260) and NOₓ content measured downstream of the SCR catalyst (260) is below a certain value, taking it that the NOₓ contents are correctly measured, and
- concluding that reducing agent crystals are present, provided that the NOₓ contents are correctly measured and the presence of reducing agent crystals in the SCR catalyst (260) has been indicated.

2. A method according to claim 1, in which said third time (t3) is a further later time.

3. A method according to claim 1, in which said third time (t3) is prior to said first time (t1) and said second time (t2).

4. A method according to any one of the foregoing claims, in which said first temperature (T1) is above 300 degrees Celsius.

5. A method according to any one of the foregoing claims, in which said second temperature (T2) is below 200 degrees Celsius

6. A method according to any one of the foregoing claims, in which said reducing agent is a urea-based reducing agent, e.g. AdBlue.

7. A method according to any one of the foregoing claims, further comprising the step of
- supplying reducing agent to the exhaust flow after the second time (t2).

8. An SCR system comprising means adapted to supplying reducing agent to an exhaust flow upstream of an SCR catalyst (260) and means (245, 255) adapted to measuring the content of NOₓ in the exhaust gases upstream and downstream of the SCR catalyst (260), thereby detecting any presence of reducing agent crystals in the SCR catalyst (260),
**characterised by**
- means (200; 210; 500) adapted to shutting off the supply of reducing agent to the exhaust flow at a first time (t1) so that the SCR catalyst (260) is substantially emptied of vaporised reducing agent,
- means (245, 255) adapted to measuring NOₓ contents upstream and downstream of the SCR catalyst (260) at a later second time (t2) corresponding to a first temperature (T1) of the SCR catalyst (260) at which reducing agent crystals vaporise,
- means (200; 210; 500) adapted to comparing NOₓ content measured upstream of the SCR catalyst (260) with NOₓ content measured downstream of the SCR catalyst (260) and, if the difference between NOₓ content measured upstream of the SCR catalyst (260) and NOₓ content measured downstream of the SCR catalyst (260) exceeds a certain value, taking this as an indication of possible presence of reducing agent crystals in the SCR catalyst (260),
- means (245, 255) adapted to measuring NOₓ contents upstream of the SCR catalyst (260) and downstream of the SCR catalyst (260) at a third time (t3) corresponding to a second temperature (T2) of the SCR catalyst (260), at which temperature reducing agent crystals do not vaporise,
- means (200; 210; 500) adapted to comparing NOₓ content measured upstream of the SCR catalyst (260) with NOₓ content measured downstream of the SCR catalyst (260) and, if the difference between NOₓ content measured upstream of the SCR catalyst (260) and NOₓ content measured downstream of the SCR catalyst (260) is below a certain value, concluding that the NOₓ contents are correctly measured, and
- means adapted to determining that reducing agent crystals are present, provided that the NOₓ contents are correctly measured and the presence of reducing agent crystals in the SCR catalyst (260) has been indicated.

9. An SCR system according to claim 8, further comprising
- means (250, 200, 210, 500) adapted to supplying reducing agent to the exhaust flow after the second time (t2).

10. A motor vehicle (100; 110) provided with an SCR system according to either of claims 8 and 9.

11. A motor vehicle (100; 110) according to claim 10, which vehicle is any from among truck, bus or car.

12. A computer programme (P) pertaining to an SCR system whereby reducing agent is supplied to an exhaust flow upstream of an SCR catalyst (260), the content of NOₓ in the exhaust gases is measured upstream and downstream of the SCR catalyst (260) and any presence of reducing agent crystals in the SCR catalyst (260) is detected, which programme comprises programme code for causing an electronic control unit (200; 500) or another computer (210; 500) connected to the electronic control unit (200; 500) to perform steps according to any one of claims 1-7.

13. A computer programme product comprising a programme code stored on a computer-readable medium for performing method steps according to any one of claims 1-7 when said computer programme is run on an electronic control unit (200; 500) or another computer (210; 500) connected to the electronic control unit (200; 500).

## Patentansprüche

1. Verfahren, betreffend ein SCR-System, wobei Reduktionsmittel einem Abgasstrom stromaufwärts eines SCR-Katalysators (260) zugeführt wird, wobei der Gehalt an NO_{X} in dem Abgas stromaufwärts und stromabwärts des SCR-Katalysators (260) gemessen wird und jegliches Vorhandensein von Reduktionsmittelkristallen in dem SCR-Katalysator (260) erfasst wird,
**gekennzeichnet durch** die Schritte
- Abschalten (s410) des Zuführens von Reduktionsmittel zu dem Abgasstrom zu einer ersten Zeit (t1), sodass der SCR-Katalysator (260) im Wesentlichen von verdampftem Reduktionsmittel entleert wird,
- Messen (s420) von NO_{X} - Gehältern stromaufwärts und stromabwärts des SCR-Katalysators (260) zu einer späteren zweiten Zeit (t2) entsprechend einer ersten Temperatur (T1) des SCR-Katalysators (260), bei der Reduktionsmittelkristalle verdampfen,
- Vergleichen (s430) eines stromaufwärts des SCR-Katalysators (260) gemessen NO_{X} - Gehalts mit einem stromabwärts des SCR-Katalysators (260) gemessen NO_{X} - Gehalts, und dann, wenn die Differenz zwischen dem stromaufwärts des SCR-Katalysators (260) gemessenen NO_{X} - Gehalt und dem stromabwärts des SCR-Katalysators (260) gemessenen NO_{X} - Gehalt einen bestimmten Wert überschreitet, Annehmen dieses als einen Hinweis auf ein mögliches Vorhandensein von Reduktionsmittelkristallen in dem SCR-Katalysator (260),
- Messen (s440) von stromaufwärts des SCR-Katalysators (260) und stromabwärts des SCR-Katalysators (260) befindlichen Gehältern zu einer dritten Zeit (t3) entsprechend einer zweiten Temperatur (T2) des SCR-Katalysators (260), bei der Reduktionsmittelkristalle nicht verdampfen,
- Vergleichen (s450) eines stromaufwärts des SCR-Katalysators (260) gemessenen NO_{X} - Gehalts mit einem stromabwärts des SCR-Katalysators (260) gemessenen NO_{X} - Gehalts, und dann, wenn die Differenz zwischen dem stromaufwärts des SCR-Katalysators (260) gemessenen NO_{X} - Gehalt und dem stromabwärts des SCR-Katalysators (260) gemessenen NO_{X} - Gehalt geringer als ein bestimmter Wert ist, Annehmen, dass die NO_{X} - Gehälter korrekt gemessen werden, und
- Schlussfolgern, dass Reduktionsmittelkristalle vorhanden sind, vorausgesetzt das die NO_{X} - Gehälter korrekt gemessen werden und dass auf das Vorhandensein von Reduktionsmittelkristallen in dem SCR-Katalysator (260) hingewiesen wurde.

2. Verfahren nach Anspruch 1, in welchem die dritte Zeit (t3) eine noch spätere Zeit ist.

3. Verfahren nach Anspruch 1, in welchem die dritte Zeit (t3) vor der ersten Zeit (t1) und der zweiten Zeit (t2) liegt.

4. Verfahren nach einem der vorherigen Ansprüche, in welchem die erste Temperatur (T1) über 300 Grad Celsius liegt.

5. Verfahren nach einem der vorherigen Ansprüche, in welchem die zweite Temperatur (T2) unter 200 Grad Celsius liegt.

6. Verfahren nach einem der vorherigen Ansprüche, in welchem das Reduktionsmittel ein auf Urea basierendes Reduktionsmittel, beispielsweise AdBlue, ist.

7. Verfahren nach einem der vorherigen Ansprüche, weiter den Schritt umfassend
- Zuführen von Reduktionsmittel zu dem Abgasstrom nach der zweiten Zeit (t2).

8. SCR-System, umfassend Mittel, ausgebildet zum Zuführen von Reduktionsmittel zu einem Abgasstrom stromaufwärts eines SCR-Katalysators (260), und Mittel (245, 255), ausgebildet zum Messen des Gehalts von NO_{X} in den Abgasen stromaufwärts und stromabwärts des SCR-Katalysators (260), dadurch Erfassen jegliches Vorhandenseins von Reduktionsmittelkristallen in dem SCR-Katalysator (260),
**gekennzeichnet durch**
- Mittel (200; 210; 500), ausgebildet zum Abschalten der Zufuhr von Reduktionsmittel zu dem Abgasstrom zu einer ersten Zeit (t1), so dass der SCR-Katalysator (260) im Wesentlichen frei von verdampftem Reduktionsmittel ist,
- Mittel (245, 255), ausgebildet zum Messen von NO_{X} - Gehältern stromaufwärts und stromabwärts des SCR-Katalysators (260) zu einem späteren zweiten Zeitpunkt (t2) entsprechend einer ersten Temperatur (T1) des SCR-Katalysators (260), bei der Reduktionsmittelkristalle verdampfen,
- Mittel (200; 210; 500) ausgebildet zum Vergleichen des stromaufwärts des SCR-Katalysators (260) gemessenen NO_{X} - Gehalts mit einem stromabwärts des SCR-Katalysators (260) gemessenen NO_{X} - Gehalt, und dann, wenn die Differenz zwischen dem stromaufwärts des SCR-Katalysators (260) gemessenen NO_{X} - Gehalt und dem stromabwärts des SCR-Katalysators (260) gemessenen NO_{X} - Gehalt einen bestimmten Wert überschreitet, Annehmen dessen als einen Hinweis auf ein mögliches Vorhandensein von Reduktionskristallen in dem SCR-Katalysator (260),
- Mittel (245, 255), ausgebildet zum Messen von stromaufwärts des SCR-Katalysators (260) und stromabwärts des SCR-Katalysators (260) befindlichen NO_{X} - Gehältern zu einer dritten Zeit (t3) entsprechend einer zweiten Temperatur (T2) des SCR-Katalysators (260), bei welcher Temperatur Reduktionsmittelkristalle nicht verdampfen,
- Mittel (200; 210; 500), ausgebildet zum Vergleichen eines stromaufwärts des SCR-Katalysators (260) gemessenen NO_{X} - Gehalts mit einem stromabwärts des SCR-Katalysators (260) gemessenen NO_{X} - Gehalt, und dann, wenn die Differenz zwischen dem stromaufwärts des SCR-Katalysators (260) gemessenen NO_{X} - Gehalt und dem stromabwärts des SCR-Katalysators (260) gemessenen NO_{X} - Gehalt niedriger als ein bestimmter Wert ist, Schlussfolgern, dass die NO_{X} - Gehälter korrekt gemessen werden, und
- Mittel, ausgebildet zum Bestimmen, dass Reduktionsmittelkristalle vorhanden sind, vorausgesetzt, dass die NO_{X} - Gehälter korrekt gemessen werden und dass auf das Vorhandensein von Reduktionsmittelkristallen in dem SCR-Katalysator (260) hingewiesen wurde.

9. SCR-System nach Anspruch 8, weiter umfassend
- Mittel (250, 200, 210, 500), ausgebildet zum Zuführen von Reduktionsmittel zu dem Abgasstrom nach der zweiten Zeit (t2).

10. Kraftfahrzeug (100; 110), ausgestattet mit einem SCR-System entweder nach Anspruch 8 oder 9.

11. Kraftfahrzeug (100; 110) nach Anspruch 10, wobei das Fahrzeug eines von einem Truck, Bus oder Auto ist.

12. Computerprogramm (P), betreffend ein SCR-System, wobei Reduktionsmittel zu einem Abgasstrom stromaufwärts eines SCR-Katalysators (260) zugeführt wird, wobei der Gehalt von NO_{X} in den Abgasen stromaufwärts und stromabwärts des SCR-Katalysators (260) gemessen wird und jegliches Vorhandensein von Reduktionsmittelkristallen in dem SCR-Katalysator (260) erfasst wird, wobei das Programm einen Programmcode umfasst zum Veranlassen einer elektronischen Steuereinheit (200; 500), oder anderer Computer (210; 500), die mit der elektronischen Steuereinheit (200; 500) verbunden sind, um die Schritte nach einem der Ansprüche 1 bis 7 auszuführen.

13. Computerprogrammprodukt, umfassend einen Programmcode gespeichert auf einem Computer lesbaren Medium zum Ausführen von Verfahrensschritten nach einem der Ansprüche 1 bis 7, wenn das Computerprogrammprodukt auf einer elektronischen Steuereinheit (200; 500), oder anderen Computern (210; 500) verbunden mit der elektronischen Steuereinheit (200; 500) ausgeführt wird.

## Revendications

1. Procédé relatif à un système de réduction catalytique sélective (RCS) par lequel un agent réducteur est délivré à un flux d'échappement en amont d'un catalyseur RCS (260), la teneur en NOₓ dans les gaz d'échappement est mesurée en amont et en aval du catalyseur RCS (260) et toute présence de cristaux d'agent réducteur dans le catalyseur RCS (260) est détectée,
**caractérisé en ce qu'**il comprend les étapes suivantes :
- couper (s410) l'alimentation en agent réducteur vers le flux d'échappement à un premier moment (t1) de telle sorte que le catalyseur RCS (260) est sensiblement vidé d'agent réducteur vaporisé,
- mesurer (s420) les teneurs en NOₓ en amont et en aval du catalyseur RCS (260) à un second moment (t2) ultérieur correspondant à une première température (T1) du catalyseur RCS (260) à laquelle les cristaux d'agent réducteur se vaporisent,
- comparer (s430) la teneur en NOₓ mesurée en amont du catalyseur RCS (260) avec la teneur en NOₓ mesurée en aval du catalyseur RCS (260) et, si la différence entre la teneur en NOₓ mesurée en amont du catalyseur RCS (260) et la teneur en NOₓ mesurée en aval du catalyseur RCS (260) dépasse une certaine valeur, prendre celle-ci comme une indication de la présence éventuelle de cristaux d'agent réducteur dans le catalyseur RCS (260),
- mesurer (s440) les teneurs en NOₓ en amont du catalyseur RCS (260) et en aval du catalyseur RCS (260) à un troisième moment (t3) correspondant à une seconde température (T2) du catalyseur RCS (260) à laquelle les cristaux d'agent réducteur ne se vaporisent pas,
- comparer (s450) la teneur en NOₓ mesurée en amont du catalyseur RCS (260) avec la teneur en NOₓ mesurée en aval du catalyseur RCS (260) et, si la différence entre la teneur en NOₓ mesurée en amont du catalyseur RCS (260) et la teneur en NOₓ mesurée en aval du catalyseur RCS (260) est inférieure à une certaine valeur, considérer que les teneurs en NOₓ sont mesurées correctement, et
- conclure que des cristaux d'agent réducteur sont présents, à condition que les teneurs en NOₓ soient mesurées correctement et que la présence de cristaux d'agent réducteur dans le catalyseur RCS (260) ait été indiquée.

2. Procédé selon la revendication 1, dans lequel ledit troisième moment (t3) est un autre moment ultérieur.

3. Procédé selon la revendication 1, dans lequel ledit troisième moment (t3) est antérieur audit premier moment (t1) et audit second moment (t2).

4. Procédé selon l'une quelconque des revendications précédentes, dans lequel ladite première température (T1) est supérieure à 300 degrés Celsius.

5. Procédé selon l'une quelconque des revendications précédentes, dans lequel ladite seconde température (T2) est inférieure à 200 degrés Celsius.

6. Procédé selon l'une quelconque des revendications précédentes, dans lequel ledit agent réducteur est un agent réducteur à base d'urée, par ex. AdBlue.

7. Procédé selon l'une quelconque des revendications précédentes, comprenant, en outre, l'étape consistant à
- délivrer l'agent réducteur au flux d'échappement après le second moment (t2).

8. Système RCS comprenant des moyens conçus pour délivrer l'agent réducteur à un flux d'échappement en amont d'un catalyseur RCS (260) et des moyens (245, 255) conçus pour mesurer la teneur en NOₓ dans les gaz d'échappement en amont et en aval du catalyseur RCS (260), détectant ainsi toute présence de cristaux d'agent réducteur dans le catalyseur RCS (260),
**caractérisé par**
- des moyens (200 ; 210 ; 500) conçus pour couper l'alimentation en agent réducteur vers le flux d'échappement à un premier moment (t1) de telle sorte que le catalyseur RCS (260) est sensiblement vidé d'agent réducteur vaporisé,
- des moyens (245, 255) conçus pour mesurer les teneurs en NOₓ en amont et en aval du catalyseur RCS (260) à un second moment (t2) ultérieur correspondant à une première température (T1) du catalyseur RCS (260) à laquelle les cristaux d'agent réducteur se vaporisent,
- des moyens (200 ; 210 ; 500) conçus pour comparer la teneur en NOₓ mesurée en amont du catalyseur RCS (260) avec la teneur en NOₓ mesurée en aval du catalyseur RCS (260) et, si la différence entre la teneur en NOₓ mesurée en amont du catalyseur RCS (260) et la teneur en NOₓ mesurée en aval du catalyseur RCS (260) dépasse une certaine valeur, prendre celle-ci comme une indication de la présence éventuelle de cristaux d'agent réducteur dans le catalyseur RCS (260),
- des moyens (245, 255) conçus pour mesurer les teneurs en NOₓ en amont du catalyseur RCS (260) et en aval du catalyseur RCS (260) à un troisième moment (t3) correspondant à une seconde température (T2) du catalyseur RCS (260) à laquelle les cristaux d'agent réducteur ne se vaporisent pas,
- des moyens (200 ; 210 ; 500) conçus pour comparer la teneur en NOₓ mesurée en amont du catalyseur RCS (260) avec la teneur en NOₓ mesurée en aval du catalyseur RCS (260) et, si la différence entre la teneur en NOₓ mesurée en amont du catalyseur RCS (260) et la teneur en NOₓ mesurée en aval du catalyseur RCS (260) est inférieure à une certaine valeur, conclure que les teneurs en NOₓ sont mesurées correctement, et
- des moyens conçus pour déterminer la présence de cristaux d'agent réducteur, à condition que les teneurs en NOₓ soient mesurées correctement et que la présence de cristaux d'agent réducteur dans le catalyseur RCS (260) ait été indiquée.

9. Système RCS selon la revendication 8, comprenant, en outre,
- des moyens (250, 200, 210, 500) conçus pour délivrer l'agent réducteur au flux d'échappement après le second moment (t2).

10. Véhicule à moteur (100; 110) pourvu d'un système RCS selon l'une ou l'autre des revendications 8 et 9.

11. Véhicule à moteur (100; 110) selon la revendication 10, lequel véhicule est indifféremment un camion, un bus ou une voiture.

12. Programme informatique (P) appartenant à un système de réduction catalytique sélective (RCS) par lequel un agent réducteur est délivré à un flux d'échappement en amont d'un catalyseur RCS (260), la teneur en NOₓ dans les gaz d'échappement est mesurée en amont et en aval du catalyseur RCS (260) et toute présence de cristaux d'agent réducteur dans le catalyseur RCS (260) est détectée, lequel programme comprend un code programme pour amener une unité de commande électronique (200, 500) ou un autre ordinateur (210 ; 500) connecté à l'unité de commande électronique (200 ; 500) à exécuter les étapes selon l'une quelconque des revendications 1 à 7.

13. Produit de programme informatique comprenant un code de programme stocké sur un support lisible par ordinateur pour exécuter les étapes de procédé selon l'une quelconque des revendications 1 à 7 lorsque ledit programme informatique est exécuté sur une unité de commande électronique (200 ; 500) ou un autre ordinateur (210 ; 500) connecté à l'unité de commande électronique (200 ; 500).
